(19) Europäisches Patentamt
European Patent Office
Office européen des brevets

(11) Publication number: **0 074 409**
**B1**

(12) **EUROPEAN PATENT SPECIFICATION**

(45) Date of publication of patent specification: **02.07.86**

(51) Int. Cl.$^4$: **C 08 K 5/42**, C 08 L 101/00, C 08 L 71/02

(21) Application number: **82900829.1**

(22) Date of filing: **16.03.82**

(86) International application number: **PCT/JP82/00070**

(87) International publication number: **WO 82/03220 30.09.82 Gazette 82/23**

(54) **ANTISTATIC AGENT FOR SYNTHETIC POLYMER MATERIAL.**

(30) Priority: **16.03.81 JP 36522/81**

(43) Date of publication of application:
**23.03.83 Bulletin 83/12**

(45) Publication of the grant of the patent:
**02.07.86 Bulletin 86/27**

(84) Designated Contracting States:
**DE FR**

(56) References cited:
**JP-B-40 012 772**

(73) Proprietor: **TAKEMOTOYUSHI CO. LTD**
**2-5, Minatomachi**
**Gamagorishi Aichi 443 (JP)**

(72) Inventor: **NAKAOKA, Yoshihiko**
**30-7, Miyukicho**
**Gamagorishi Aichi 443 (JP)**
Inventor: **SUGIURA, Fumitoshi**
**26-5, Takenoyacho-Sakuma**
**Gamagorishi Aichi 443 (JP)**

(74) Representative: **Hansen, Bernd, Dr.rer.nat. et al**
**Hoffmann, Eitle & Partner Patentanwälte**
**Arabellastrasse 4**
**D-8000 München 81 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 074 409 B1

**Description**

This invention relates to synthetic resin composition. More particularly it relates to synthetic resin composition which is characterized by containing 0.2 to 5 weight % of an anionic surfactant having a sulfoacetate group.

Synthetic resins usually have as their specific characteristic a very hydrophobic property, and their easily charging property resulting therefrom has constituted a serious obstacle to the production process of the resins as well as the use of products prepared therefrom. Namely, in the production process of plastic molded products, films and synthetic fibers using synthetic resins, static electricity is generated by contacting friction of the materials with each other and their friction with production apparatus, resulting in hindrance to smooth operations or degradation of the quality of products. Further, it is difficult to avoid undesirable phenomena such as attachment of dusts at the time of their storage, etc., static shock at the time of their use, and their easily charging property often constitutes a fatal defect to their uses.

Heretofore, various processes have been proposed for alleviating the obstacles due to the charging property of synthetic resins. As one of these processes, there is a process of attaching a substance having an antistatic property, mainly a surfactant, onto the surface of synthetic resins, but although this process is simple, it has a drawback that its effectiveness is only temporary. Further, in order to overcome this drawback, a process of fixing a high molecular weight polymer substance onto their surface and a process of reacting a considerable amount of a reactive compound with the surface of the materials have been proposed, but the amount of these substances used is generally large and as a result, good surface characteristics intrinsic of synthetic resins are liable to be harmed.

Further, as another process, there is a process of blending a substance having an antistatic property with synthetic resins to thereby improve their properties. According to this process, the durability of the effectiveness is superior to those according to the above-mentioned processes, but as far as the use of the substance is concerned, since it has already been contained in synthetic resins as a portion thereof in the production process of molded products, films and synthetic fibers, it is necessary for the additive to satisfy to a higher extent the characteristics required. For example, according to this process, various problems are liable to be raised such as coloring of the materials due to heating in the production process; reduction in the mechanical characteristics of the materials such as strength, hardness, etc. due to blending; reduction in transparency due to insufficient compatibility of the additive with synthetic resins; increase in adherence of the surface of the synthetic resins due to bleed-out of the additive; hence on the contrary, the intrinsic superior characteristics of synthetic resins are liable to be harmed. As main additives proposed in this process, various surfactants have been known. Many nonionic surfactants are generally superior in the compatibility with synthetic resins to ionic surfactants, but their antistatic property is not sufficient so that it is necessary to blend it in a large amount in order to obtain a sufficient effectiveness. This is liable to bring about degradation of physical properties intrinsic in synthetic resins as well as troubles in the production process. On the other hand, many ionic surfactants are generally inferior in the compatibility with synthetic resins and hence difficult to disperse uniformly therein. Further, cationic or amphoteric surfactants having a quaternary nitrogen in the molecule, although usually superior in the antistatic effectiveness, are liable to cause coloring when heated; hence they are unsuitable at the time of their actual use. Thus it is the present situation that antistatic agents which are usable for commercial production and sufficiently satisfactory are now not available.

In view of the above, the present inventors have made strenuous studies in order to obtain an internal addition type antistatic agent for synthetic resins, which are superior in the antistatic property and have overcome the above-mentioned various drawbacks, and as a result have attained the present invention.

The present invention is directed to an antistatic composition comprising a synthetic resin admixed with an antistatic agent, characterized in that it contains as antistatic agent 0.2 to 5 weight % of an anionic surfactant having a sulfoacetate group of the following formula:

$$A\text{—}OCCH_2SO_3M$$

wherein A:

$R_1O(C_mH_{2m}O)_a$,

$R_2O(C_mH_{2m}O)_b\ (C_nH_{2n}O)_c$, and

$R_3O[(C_mH_{2m}O)_d/(C_nH_{2n}O)_e]$

wherein $[(C_mH_{2m}O)_d/(C_nH_{2n}O)_e]$ represents a random copolymer of monomers $C_mH_{2m}O$ and $C_nH_{2n}O$;

$R_1$—$R_3$: alkyl of 4—22 carbon atoms, alkenyl of 8—22 carbon atoms or

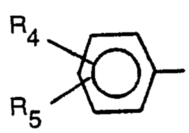 ;

$R_4$—$R_5$: H, alkyl of 1—18 carbon atoms, phenyl, styryl, benzyl or benzylphenyl;

a: an integer of 0—20;

b, c, d, e: an integer of 1—20;
m, n: an integer of 2—4 (but m is not equal to n);
M: alkali metal.

According to the present invention, a superior antistatic effectiveness can be obtained by having one, two or more selected from among anionic surfactants having a sulfoacetate group and expressed by the above-mentioned general formula (which surfactants will hereinafter be referred to as anionic surfactant), contained in synthetic resins, and the anionic surfactants expressed by the general formula are prepared e.g. by the method disclosed in Japanese patent No. 489729: First, an organic compound having one active hydroxyl group in the molecule and monochloroacetic acid in a nearly equimolecular amount to that of the former are subjected to esterification reaction using an acid catalyst in the presence of an organic solvent having no active hydrogen or in the absence of solvent. Next, the catalyst is inactivated by neutralization, or the catalytic performance is removed by removing it, and in the case where an organic solvent is present, the solvent is distilled off, followed by rendering the solvent system a water-isopropanol mixed solvent system, adding a nearly equimolecular amount of sodium sulfite and completing sulfonation reaction under reflux. If necessary, byproduced NaCl or unreacted material is removed, and as a method for this removal, it is advantageous to carry out extraction with a single organic solvent or a mixture system of a plurality of organic solvents, taking into account the solubility of product. Examples of the organic compound having one active hydroxyl group in the molecule, used in the preparation of the anionic surfactants to be used in the present invention are monohydric aliphatic alcohols, alkylene oxide addition products thereof, alkylene oxide addition products of phenol and phenol derivatives. It is possible to optionally choose the carbon number of alkyl or alkyl chain, kind of alkylene oxide, the number of addition mols, and the addition form in accordance with objects, and hence they have an advantage that it is possible to broadly adjust properties such as antistatic property, compatibility with synthetic resins, to the condition to which they are applied, and particularly their characteristics are very advantageous to circumstances where transparency is needed. Examples of monohydric aliphatic alcohols as one of the raw materials of the anionic surfactants are butanol, octanol, decyl alcohol, lauryl alcohol, cetyl alcohol, stearyl alcohol, oleyl alcohol, isotridecyl alcohol, isohexadecyl alcohol, isostearyl alcohol. Further, examples of phenol derivatives are t-butylphenyl, octylphenol, nonylphenol, dodecylphenol, octadecylphenol, dinonylphenol, phenylphenol, benzylphenol, styrylphenol, benzylphenylphenol. As the alkylene oxide which forms an alkylene oxide addition product together with a monovalent hydroxyl group compound as in the abovementioned examples, ethylene oxide, propylene oxide and butylene oxide are used, and among these, any of an addition form using one kind, a block copolymerization type addition form and a random copolymerization type addition form using two kinds or more may be applied to the present invention. In the alkylene oxide addition product applicable to the present invention, the number of mols of alkylene oxide greatly varies depending on various conditions such as synthetic high molecular weight polymer materials applied, the chemical structure of monovalent hydroxyl group compound, but a preferable range for making the most of the antistatic property of the sulfoacetate group is about up to 20 mols in the case where a single alkylene oxide is used, while up to about 20 mols of each alkylene oxide in the case where two kinds or more of alkylene oxides are used in a block type or random type manner. Further, as ions as a counterpart of sulfonic acid, alkali metals are preferable in order to display the antistatic property. Potassium, sodium and lithium are preferable.

In carrying out the present invention, one kind or two kinds or more selected from among anionic surfactants expressed by the above-mentioned general formula are used depending on the kind and purpose of the synthetic resins used, but when and the method by which the anionic surfactants are added and when to the synthetic resins are not particularly limited in the present invention, and it is possible to add them at any stage where they are added to monomers of synthetic high molecular weight polymer materials, a midway stage during the polymerization, a stage where they are added to polymer after completion of polymerization, and the like stages, and it is preferred to employ a time and a method which are commercially most advantageous in the aspect of practical use. Further, the surfactants are added in the range of 0.2 to 5% by weight, more preferably in the range of 0.3 to 3% by weight.

In carrying out the present invention, it does not matter if other components are added for other purposes as far as this does not harm the effectiveness of the present invention. For example, stabilizers such as antioxidant, ultraviolet-absorbing agent, surfactants for improving dispersibility, are used, and besides, various organic or inorganic compounds are added for various purposes to synthetic resins used for producing plastic molded products, films, and synthetic fibers.

The synthetic resins to which the present invention is applied have no particular limitation, but the present invention is effectively applicable to polyethylene, polypropylene, polystyrene, polyvinyl chloride, polymethyl methacrylate, polyesters and polyamides.

The present invention will be further described by way of Examples and also its effectivensss will be mentioned.

Example 1

Nonylphenyl ethylene oxide 10 mols addition product (0.5 mol), monochloroacetic acid (0.5 mol) and conc. sulfuric acid (0.5% by weight based on the above-mentioned raw materials) were added into a 1 l capacity four-neck flask connected to a vacuum line consisting of a vacuum pump and a condenser. The

contents were heated up to 110°C and esterification was completed under reduced pressure in 3 hours, followed by cooling the contents down to room temperature, neutralizing with 5% NaOH in an equivalent amount to catalyst neutralization, and transferring into a 2 l capacity flask equipped with an agitator, a thermometer and a reflux condenser. To the contents were then added isopropanol in an equal amount to that of the contents, water in an amount of three times that thereof and sodium sulfite (0.5 mol), and sulfonation reaction was completed under reflux in 4 hours. Isopropanol was distilled off from the contents as much as possible under atmospheric pressure, followed by adding xylene in an amount of 1.5 times the amount of the resulting sulfonate compound i.e. anionic surfactant, distilling off remaining water and isopropanol, filtering off precipitated inorganic substance, and distilling off xylene under reduced pressure.

The resulting sulfonate compound (3 parts by weight); and polymethyl methacrylate (97 parts by weight) were neaded for 5 minutes in a Laboplastic mill manufactured by Toyo Seiki Co. Japan and the resulting mixture was molded at 190°C by means of a hot press manufactured by Toyo Seiki Co. to obtain a sheet of 2 mm thick.

Examples 2—7

Sheets were obtained in the same manner as in Example 1, using sulfonate compounds prepared in almost the same manner as in Example 1 and indicated in the following Table, and also using resins indicated in the Table.

Comparative Examples 1—6

For comparison's sake, sheets of resins used in Examples but containing no additive, and sheets thereof containing conventional additives were prepared and subjected to measurements.

The results of the properties (surface resistivity, coloring property and transparency) of the sheets obtained in Examples 1—7 and Comparative Examples 1—6 are shown in the Table.

The methods for measuring the measured values listed in the Table are as follows:

Surface resistivity:

Samples were allowed to stand overnight in a room of constant temperature and constant humidity (20°C, 65% RH), followed by measurement in the same atmosphere by means of a super-insulation resistor (SM—SE Type, manufactured by Toa Dempa Kogyo K.K. Japan).

Coloring property:

Sample sheets were observed by naked eyes, compared with blanks and judged as follows:

O . . . . . Similar to blanks or very slightly colored.
Δ . . . . . Coloration was clearly observed, but very light.
× . . . . . Coloration was clearly observed and very deep.

Transparency:

Sheets of transparent resins were compared with blanks by naked eyes and judged as follows, but sheets of polyethylene were not evaluated since they were opaque.

O . . . . . Almost similar to blanks.
Δ . . . . . Slightly inferior in transparency.
× . . . . . Difference from blanks clearly observed.

TABLE

| | Example | Additive | Resin* | Content of additive (wt. %) | Surface resistivity (Ω) | Coloring property | Trans-parency |
|---|---|---|---|---|---|---|---|
| Example of present invention | Example 1 | 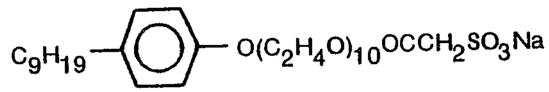 | MMA | 3 | $5 \times 10^8$ | o | o |
| | Example 2 | ,, | PS | 3 | $2 \times 10^9$ | o | o–Δ |
| | Example 3 | $C_{18}H_{35}O(C_3H_6O)_6OCCH_2SO_3Na$ | PE | 3 | $3 \times 10^8$ | o | – |
| | Example 4 | 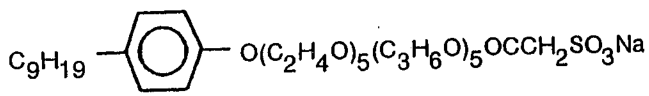 | PVC | 3 | $5 \times 10^{10}$ | o | o |
| | Example 5 | $i\text{-}C_{16}H_{33}OOCCH_2SO_3K$ | PE | 3 | $5 \times 10^9$ | o | – |
| | Example 6 | 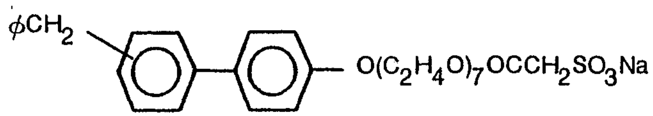 | PS | 3 | $2 \times 10^{10}$ | o | o–Δ |
| | Example 7 | 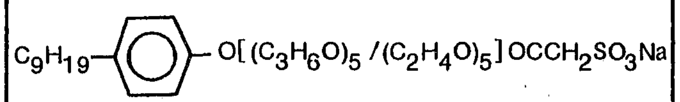 | MMA | 3 | $2 \times 10^9$ | o | o |

TABLE

| Example | | Additive | Resin* | Content of additive (wt. %) | Surface resistivity (Ω) | Coloring property | Trans-parency |
|---|---|---|---|---|---|---|---|
| Conventional Example | Compar. Ex. 1 | – | MMA | – | $10^{14}<$ | o | o |
| | Compar. Ex. 2 | – | PS | – | $10^{14}<$ | o | o |
| | Compar. Ex. 3 | – | PE | – | $10^{14}<$ | o | o |
| | Compar. Ex. 4 | 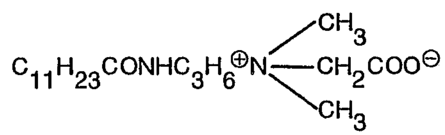 | PE | 3 | $2 \times 10^{10}$ | × | – |
| | Compar. Ex. 5 | 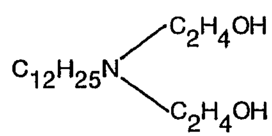 | MMA | 3 | $9 \times 10^{13}$ | o | o |
| | Compar. Ex. 6 | 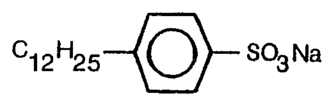 | MMA | 3 | $2 \times 10^{9}$ | o | x |

*The respective resins in the Table were abbreviated as follows:

MMA: polymethyl methacrylate
PS: polystyrene
PE: polyethylene

As seen from the Table, additives of Examples of the present invention are superior in antistatic property, resistance to coloring degradation and transparency; hence the effectiveness of the present invention is evident.

**Claim**

1. Antistatic composition comprising a synthetic resin admixed with an antistatic agent, characterized in that it contains as antistatic agent 0.2 to 5 weight % of an anionic surfactant having a sulfoacetate group of the following formula:

$$A—OCCH_2SO_3M$$

wherein A:

$R_1O(C_mH_{2m}O)_a$,
$R_2O(C_mH_{2m}O)_b\ (C_nH_{2n}O)_c$, and
$R_3O[(C_mH_{2m}O)_d/(C_nH_{2n}O)_e]$
wherein $[(C_mH_{2m}O)_d/(C_nH_{2n}O)_e]$ represents a random copolymer of monomers $C_mH_{2m}O$ and $C_nH_{2n}O$;
$R_1$—$R_3$: alkyl of 4—22 carbon atoms, alkenyl of 8—22 carbon atoms or

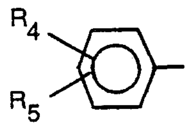 ;

$R_4$—$R_5$: H, alkyl of 1—18 carbon atoms, phenyl, styryl, benzyl or benzylphenyl;
a: an integer of 0—20;
b, c, d, e: an integer of 1—20;
m, n: an integer of 2—4 (but m is not equal to n);
M: alkali metal.

**Patentansprüche**

1. Antistatische Zusammensetzung aus einem synthetischen Harz, das mit einem antistatischen Mittel vermischt ist, dadurch gekennzeichnet, dass sie als antistatisches Mittel 0,2 bis 5 Gew.% eines anionischen, oberflächenaktiven Mittels mit einer Sulfoacetatgruppe der nachfolgenden Formel enthält:

$$A—OCCH_2SO_3M$$

worin bedeuten

A: $R_1O(C_mH_{2m}O)_a$, $R_2(C_mH_{2m}O)_b\ (C_nH_{2n}O)_c$ und $R_3O[(C_mH_{2m}O)_d/(C_nH_{2n}O)_e]$, worin $[(C_mH_{2m}O)_d/(C_nH_{2n}O)_e]$ ein statistisches Copolymer von Monomeren $C_mH_{2m}$ und $C_nH_{2n}O$ bedeutet;
$R_1$ bis $R_3$: Alkyl mit 4 bis 22 Kohlenstoffatomen, Alkenyl mit 8 bis 22 Kohlenstoffatomen oder

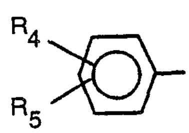 ;

$R_4$ bis $R_5$: H, Alkyl mit 1 bis 18 Kohlenstoffatomen, Phenyl, Styryl, Benzyl oder Benzylphenyl;
a: eine ganze Zahl von 0 bis 20;
b, c, d, e: eine ganze Zahl von 1 bis 20;
m, n: eine ganze Zahl von 2 bis 4 (wobei m jedoch nicht gleich n ist);
M: ein Alkalimetall.

**Revendications**

1. Composition antistatique comprenant une résine synthétique en mélange avec un agent antistatique, caractérisée en ce qu'elle contient comme agent antistatique 0,2 à 5% en poids d'un surfactant anionique ayant un groupe sulfo-acétate de formule suivante:

$$A—OCCH_2SO_3M$$

dans laquelle

A: $R_1O(C_mH_{2m}O)_a$, $R_2O(C_mH_{2m}O)_b$ $(C_nH_{2n}O)_c$, et $R_3O[(C_mH_{2m}O)_d/(C_nH_{2n}O)_e]$ où $[(C_mH_{2m}O)_d/(C_nH_{2n}O)_e]$ représente un copolymère aléatoire de monomères $C_mH_{2m}O$ et $C_nH_{2n}O$;

$R_1$—$R_3$: alkyle de 4 à 22 atomes de carbone, alkényle de 8 à 22 atomes de carbone ou

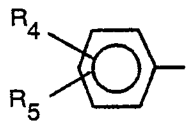 ;

$R_4$—$R_5$: H, alkyle de 1 à 18 atomes de carbone, phényle, styryle, benzyle ou benzylphényle;
a: nombre entier de 0 à 20;
b, c, d, e: nombre entier de 1 à 20;
m, n: nombre entier de 2 à 4 (mais m n'est pas égal à n);
M: métal alcalin.